# EUROPÄISCHE PATENTSCHRIFT

(11) **EP 3 155 297 B1**
(45) Veröffentlichungstag und Bekanntmachung des Hinweises auf die Patenterteilung: **20.06.2018**
(21) Anmeldenummer: 15724625.7
(22) Anmeldetag: 22.05.2015
(51) Int. Cl.: F16H 59/02, G01D 5/20, G01B 7/00

(54) **RÜCKSTELLEINRICHTUNG FÜR EINEN GETRIEBE-WÄHLHEBEL**
RESET DEVICE FOR A TRANSMISSION SELECTOR LEVER
DISPOSITIF DE RAPPEL POUR LEVIER DE SÉLECTION DE BOÎTE DE VITESSES

(30) Priorität: 13.06.2014 DE 102014211376; 24.06.2014 DE 102014212058
(43) Veröffentlichungstag der Anmeldung: 19.04.2017
(73) Patentinhaber: ZF Friedrichshafen AG, 88046 Friedrichshafen (DE)
(72) Erfinder: JAHN, Jorg, 32257 Bünde (DE); DEGEN, Joachim, 46517 Schermbeck (DE)
(86) Internationale Anmeldenummer: PCT/EP2015/061349
(87) Internationale Veröffentlichungsnummer: WO 2015/189021

(56) Entgegenhaltungen:
- EP-A1- 1 537 664
- EP-A2- 1 688 709
- DE-A1-102007 062 824
- US-A1- 2012 085 193

## Beschreibung

Die Erfindung betrifft eine Rückstelleinrichtung für einen Getriebe-Wählhebel in einem Kraftfahrzeug entsprechend dem Oberbegriff des Anspruchs 1 und wie sie aus dem Dokument US 2012/085193 A1 bekannt ist. Insbesondere betrifft die Erfindung die Abtastung einer Position eines Elements der Rückstelleinrichtung.

Ein Kraftfahrzeug umfasst ein Getriebe mit mehreren Gangstufen. Ein Betrieb des Getriebes ist mittels eines Wählhebels durch einen Fahrer des Kraftfahrzeugs beeinflussbar. Beispielsweise kann ein manuelles Programm gewählt werden, bei dem der Fahrer einen Gangwechsel des Getriebes über den Wählhebel explizit auslösen muss. Alternativ dazu kann ein automatisches Programm gewählt werden, bei dem eine Steuereinrichtung das Auswählen und Einlegen von Gangstufen im Getriebe erledigt. Die Programme können ebenfalls durch den Wählhebel ausgewählt werden. Um bei Fahrtantritt den Motor starten zu können, muss das automatische Programm voreingestellt sein. Dafür kann beispielsweise beim vorherigen Abstellen des Fahrzeugs der Wählhebel vom manuellen Programm in das automatische Programm auf Position N geschoben werden. Weiterhin kann der selbe Mechanismus den Wählhebel verriegeln und beispielsweise eine Kippbewegung zurück in das manuelle Programm in Abhängigkeit des Betriebszustandes (z.B. Zündung aus) verhindern.

Eine Rückstelleinrichtung zum Einlegen des automatischen Programms umfasst einen Aktuator, dessen Position abgetastet werden muss, um sicher zu stellen, dass die Rückstellung korrekt und vollständig durchgeführt wurde sowie der Rückstellmechanismus in seine Endlage / Ausgangsposition zurückgekehrt ist. Bekannte Sensoren im Wählhebel, die zur Abtastung der Position der Rückstelleinrichtung verwendet werden können, umfassen beispielsweise Schalter oder Hallsensoren. Diese Elemente sind jedoch relativ kostenintensiv in der Herstellung und können eine erhöhte Ausfallwahrscheinlichkeit aufweisen, sodass die Rückstelleinrichtung eine verringerte Zuverlässigkeit hat.

JP 2008-256693 zeigt eine Anordnung mit drei flachen, horizontal versetzten Spulen, die durch ein rhombusförmiges Wirbelstromelement beeinflusst werden können. Dadurch kann die Position des Elements bezüglich der Spulen bestimmt werden, jedoch ist der für die Positionsbestimmung erforderliche schaltungstechnische und mechanische Aufwand relativ groß.

Es ist Aufgabe der vorliegenden Erfindung, eine Rückstelleinrichtung mit einer verbesserten Positionsbestimmung für einen Getriebe-Wählhebel eines Kraftfahrzeugs bereitzustellen. Die Erfindung löst diese Aufgabe mittels einer Rückstelleinrichtung mit den Merkmalen des unabhängigen Anspruchs. Unteransprüche geben bevorzugte Ausführungsformen wieder.

Eine Rückstelleinrichtung für einen Wählhebel für eine Gangstufe eines Getriebes in einem Kraftfahrzeug umfasst eine elektrische Antriebseinrichtung zum Verfahren eines Eingriffselements, um den Wählhebel in eine vorbestimmte Position zu bewegen, einen Positionssensor zur Bestimmung einer Position des Eingriffselements und eine elektrische Ansteuereinrichtung zur Ansteuerung der Antriebseinrichtung in Abhängigkeit der Position des Eingriffselements. Dabei umfasst der Positionssensor eine erste Spule, die an der Ansteuereinrichtung angebracht ist, und mit dem Eingriffselement ist ein magnetisches Flusselement mechanisch gekoppelt. Die Antriebseinrichtung ist derart bezüglich der Ansteuereinrichtung angeordnet, dass das Flusselement in Abhängigkeit einer Position des Eingriffselements die Induktivität der ersten Spule beeinflusst.

Dabei wird bevorzugterweise durch die erste Spule ein dynamisches Magnetfeld erzeugt, das durch das Flusselement beeinflusst wird, sodass die Anwesenheit des Flusselements im Bereich der ersten Spule auf der Basis eines elektrischen Parameters an der Spule bestimmt werden kann. Insbesondere kann die Induktivität der ersten Spule vergrößert oder verkleinert werden, wenn das Flusselement an die erste Spule angenähert wird.

Durch das Anbringen der ersten Spule unmittelbar an der Ansteuereinrichtung können Kosten eingespart und die Zuverlässigkeit des Positionssensors erhöht werden. Das Erreichen einer oder mehrerer Endlagen des Eingriffselements kann so mit geringem Aufwand einfach und sicher erfasst werden. Eine Montage und/oder Justierung der ersten Spule kann kostengünstig durchgeführt werden.

Bevorzugterweise umfasst die Ansteuereinrichtung eine Leiterplatte, wobei die erste Spule als Leiterbahn auf der Leiterplatte ausgebildet ist, insbesondere als spiralförmige Leiterbahn. Dadurch kann eine separat anzubringende Spule eingespart werden. Durch verringerten Materialeinsatz und verringerte Herstellungskosten kann die Rückstelleinrichtung kostengünstiger produzierbar sein. Außerdem können Verbindungsstellen entfallen, sodass die Zuverlässigkeit der Rückstelleinrichtung erhöht sein kann. Die Spule kann an der Leiterplatte beispielsweise durch Abdeckung leichter geschützt werden, sodass sie unempfindlich gegenüber Feuchtigkeit, Korrosion und elektrischen Kontakt ist.

In einer besonders bevorzugten Ausführungsform umfasst der Positionssensor eine zweite Spule, die derart an der Ansteuereinrichtung angebracht ist, dass ihre Induktivität von einer Position des Eingriffselements unbeeinflusst ist, wobei der Positionssensor dazu eingerichtet ist, die Position des Eingriffselements auf der Basis eines Unterschieds der Induktivitäten der Spulen zu bestimmen. Dadurch kann eine differenzielle Erfassung der Position des Eingriffselements durchgeführt werden, die hohe Genauigkeit oder hohe Zuverlässigkeit bieten kann. Ein derartiges Messprinzip ist in der EP 1 884 749 A1 beschrieben. Durch die Verwendung dieses Messprinzips für die Rückstelleinrichtung kann eine besonders kostengünstige und zuverlässige integrierte Lösung geschaffen werden, die sicherstellen kann, dass der Wählhebel korrekt rückgestellt wird.

In einer Ausführungsform ist wenigstens ein weiterer Positionssensor zur Bestimmung einer Position des Wählhebels vorgesehen. Der wenigstens eine weitere Positionssensor kann insbesondere nach dem gleichen Messprinzip arbeiten, wobei gemeinsame Bauelemente mehrfach verwendet werden können. Beispielsweise kann der wenigstens eine weitere Positionssensor eine dritte Spule umfassen, deren Induktivität von der Position des Wählhebels abhängig ist, während die zweite Spule von einer Position des Wählhebels unbeeinflusst ist. Dabei wird die Position des Wählhebels auf der Basis eines Unterschieds der Induktivitäten der zweiten und der dritten Spule bestimmt.

Durch das mehrfache Ausnutzen der zweiten Spule kann der relative Aufwand zur Bestimmung der Position des Eingriffselements verringert sein. Systemkosten für die Rückstelleinrichtung können so gesenkt sein. Insbesondere in einer Ausführungsform, bei der die Spulen unabhängig voneinander zu elektromagnetischen Schwingungen angeregt werden, deren Frequenzen numerisch miteinander verglichen werden, kann eine gegenseitige Beeinflussung der ersten und dritten Spule bzw. eine Beeinflussung der zweiten Spule durch eines der beweglichen Elemente praktisch ausgeschlossen sein. Die Positionsbestimmungen können daher mit geringem Aufwand wechselwirkungsfrei und robust durchgeführt werden.

Zur Beeinflussung der Induktivität der ersten Spule ist das Flusselement in unterschiedlichen Varianten dazu eingerichtet, den magnetischen Fluss des durch die erste Spule bereitgestellten Magnetfelds zu verstärken oder zu verringern, wenn das Flusselement der ersten Spule angenähert wird. Dadurch kann sich die Induktivität der ersten Spule entsprechend verändern. Dabei kann eine Verstärkung bzw. Abschwächung um einen vorbestimmten Faktor oder über einen vorbestimmten Schwellenwert hinweg zur Bestimmung der An- bzw. Abwesenheit des Flusselements an der Spule ausgenutzt werden, sodass nach Art eines Schalters ein zweiwertiges Ergebnis bereitgestellt sein kann. Umfasst das Flusselement einen Abschnitt mit einem weichmagnetischen Werkstoff, so kann dieser bei Annäherung an die erste Spule das Magnetfeld bzw. den magnetischen Fluss im Bereich der ersten Spule verstärken und somit die Induktivität der ersten Spule vergrößern. Umfasst das Flusselement hingegen einen Abschnitt mit einem elektrisch leitfähigen Material, so kann das Magnetfeld bzw. der magnetische Fluss im Bereich der ersten Spule verringert werden, wenn der Abschnitt der ersten Spule angenähert wird. Die Induktivität der ersten Spule nimmt dabei ab. Das leitfähige Material ist bevorzugterweise nicht ferromagnetisch, beispielsweise kann Kupfer, Aluminium oder Gold oder ein anderes hochleitfähiges Metall verwendet werden, gegebenenfalls auch als Legierung.

Beide Varianten können unabhängig voneinander jeweils kostengünstig durchgeführt werden. Der weichmagnetische Werkstoff kann beispielsweise Ferrit, Weicheisen, eine Eisenlegierung oder ein spezielles weichmagnetisches Metall wie Mu-Metall umfassen. Grundsätzlich benötigt das Material gute Hochfrequenzeigenschaften. Dazu müssen die Leitfähigkeit und die Ummagnetisierungsverluste des Materials niedrig sein, die Permeabilität jedoch hoch. In einer Ausführungsform ist das leitfähige Material als separates Flusselement am Eingriffselement angebracht. In einer anderen Ausführungsform umfasst das Eingriffselement einen Abschnitt aus leitfähigem Material, das als Flusselement genutzt werden kann.

Zur Positionsbestimmung kann eine Anordnung mehrerer Abschnitte von Flusselementen vorgesehen sein, wobei jeder Abschnitt einen weichmagnetischen Werkstoff, ein elektrisch leitfähiges Material oder ein die Induktivität der ersten Spule unbeeinflusst lassendes Material umfassen kann. Der letztgenannte Fall kann insbesondere durch eine entsprechende Aussparung bzw. Begrenzung des Flusselements realisiert sein.

Die Abschnitte können nacheinander an der ersten Spule vorbei bewegt werden, wenn das Eingriffselement verfahren wird, wobei die Position des Eingriffselements auf der Basis eines zeitlichen Verlaufs von Induktionen an der ersten Spule inkrementell bestimmt wird. Das Prinzip eines digitalen Inkrementalgebers kann so auf die Bestimmung der Position des Eingriffselements angewendet werden. Dabei kann mit geringem Aufwand eine hohe Positionsauflösung des Eingriffselements bestimmt werden.

In einer anderen Ausführungsform sind mehrere erste Spulen vorgesehen, wobei die Anordnung an den ersten Spulen vorbei bewegt wird, wenn das Eingriffselement verfahren wird. Dabei wird die Position des Eingriffselements auf der Basis einer Kombination von Induktionen der ersten Spulen absolut bestimmt. Die Position des Eingriffselements kann durch die Lage der Abschnitte bezüglich der ersten Spulen digital codiert sein, sodass eine hohe Bestimmungsgenauigkeit der Position des Eingriffselements erzielt werden kann. In noch einer weiteren Ausführungsform sind zwei Flusselemente vorgesehen, die einander bezüglich der Leiterplatte gegenüber liegen. Dadurch kann die Beeinflussung der an der Leiterplatte angebrachten ersten Spule durch die beiden Flusselemente verstärkt sein.

In noch einer weiteren Ausführungsform sind zwei erste Spulen vorgesehen, die auf unterschiedlichen Ebenen der Leiterplatte liegen. Die ersten Spulen können beispielsweise mittels Durchkontaktierungen elektrisch miteinander verbunden sein, insbesondere elektrisch in Serie. Dadurch können die beiden ersten Spulen als eine erste Spule mit erhöhter Windungszahl angesehen werden. Auf diese Weise kann die Induktivität der Gesamtspule leichter durch das Flusselement verändert werden.

Die Erfindung wird nun mit Bezug auf die beigefügten Figuren genauer beschrieben, in denen:
Fig. 1 ein Steuersystem;
Fign. 2-3 zwei exemplarische mechanische Antriebe;
Fign. 4-6 Varianten einer Anordnung eines mechanischen Antriebs an der Ansteuereinrichtung der Rückstelleinrichtung von Fig. 1 und
Fign. 7-9 Anordnungen von Flusselementen
darstellt.

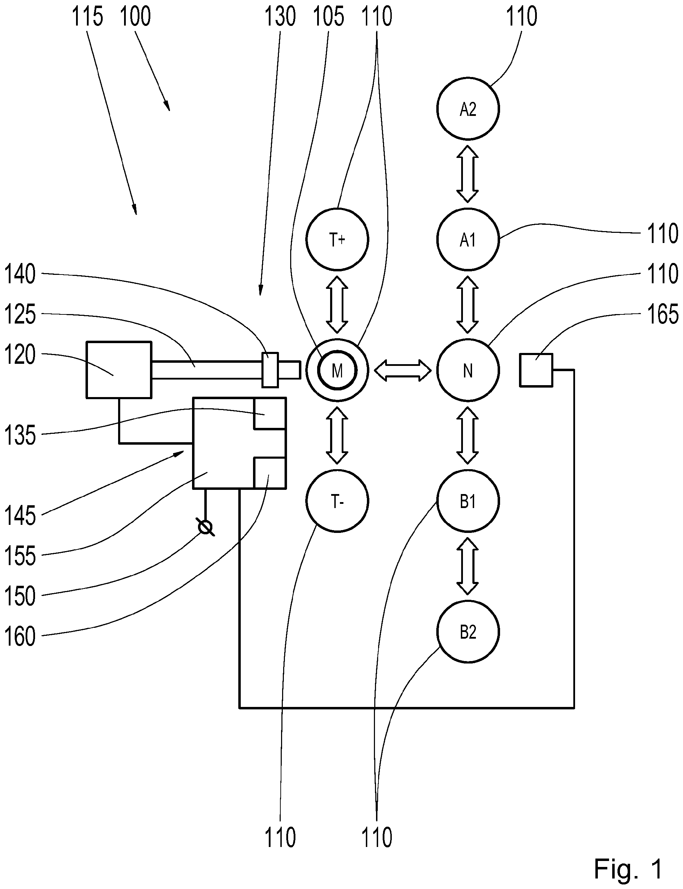

Figur 1 zeigt ein Steuersystem 100 zur Steuerung eines Getriebes in einem Kraftfahrzeug. Mittels eines monostabil gelagerten Wählhebels 105 kann eine Gangstufe des Getriebes direkt oder indirekt angewählt werden. Dazu kann der Wählhebel 105 in unterschiedliche Positionen 110 gebracht werden. In der beispielhaft dargestellten Ausführungsform sind in einer rechten Schaltgasse, welche einer Automatikgasse eines Automatikgetriebes entspricht, in vertikaler Richtung Positionen A1, A2, B1 und B2 dargestellt. Ebenfalls im rechten Bereich liegt die Position N, die einer Neutralstellung des Wählhebels entspricht, in welche der Wählhebel aufgrund seiner monostabilen Lagerung automatisch zurückkehrt, um seine Ausgangsstellung einzunehmen, welche einer unbetätigten Wählhebelstellung entspricht. Durch Schaltbewegungen in der Automatikgasse lassen sich wenigstens die Gangstufen D für Vorwärtsfahrbetrieb, N für Leerlaufstellung des Getriebes und R für Rückwärtsfahrbetrieb auswählen, wobei die Gangstufen D und R über die Gangstufe N voneinander getrennt sind. Weitere auswählbare Gangstufen sind in der Automatikgasse möglich. Die Position A1 steht bei diesem bevorzugten Ausführungsbeispiel für einen in der Anordnungsreihenfolge der Gangstufen bewirkenden Vorwärtswechsel von einer Gangstufe zur nächsten, wobei A2 einen Vorwärtswechsel von einer Gangstufen zur übernächsten über ein Durchschalten der dazwischenliegenden Gangstufe ermöglicht. B1 steht entsprechend für einen Rückwärtswechsel von einer Gangstufe zur nächsten, wobei B2 einen in der Anordnungsreihenfolge der Gangstufen bewirkenden Rückwärtswechsel von einer Gangstufe zur übernächsten über ein Durchschalten der dazwischenliegenden Gangstufe ermöglicht. Beispielsweise können Gangstufen in der Anordnungsreihenfolge R, N, D vorgesehen sein, wobei das Automatikgetriebe beispielsweise in der Gangstufe R geschaltet sein kann. Eine Auswahl der Position A1 bewirkt dann einen Wechsel von der Gangstufe R in die Gangstufe N. Die Auswahl der Position A2 bewirkt dahingegen einen Wechsel von der Gangstufe R über die Gangstufe N in die Gangstufe D. Sofern die Gangstufe D aktuell in dem Automatikgetriebe eingelegt sein sollte, kann dahingegen über eine Auswahl der Position B1 die Gangstufe N oder über die Auswahl der Position B2 die Gangstufe R über ein Durchschalten der Gangstufe N eingelegt werden.

In einer linken Schaltgasse, welche einer manuellen Schaltgasse entspricht, sind in vertikaler Richtung die Positionen M, T+ und T- dargestellt. Steht der Wählhebel 105 wie dargestellt in der Position M, so kann er durch den Fahrer in die T+-Position bewegt werden, um ein Hochschalten des Getriebes zu veranlassen, oder in die TPosition, um ein Herunterschalten zu veranlassen. Nach dem Loslassen kehrt der Wählhebel 105 üblicherweise durch Federkraft in die Position M zurück.

Ungeachtet der genauen Anordnung unterschiedlicher Positionen 110 ist das Steuersystem 100 dazu eingerichtet, den Wählhebel 105 unter vorbestimmten Bedingungen in eine vorbestimmte Position 110 zu bringen, insbesondere von einer Position 110 der manuellen Schaltgasse in eine Position 110 der automatischen Schaltgasse. Vorliegend kann der Wählhebel 105 beispielsweise von der Position M in die Position N verbracht werden, wenn das Kraftfahrzeug abgestellt wird. Für das Verbringen ist eine Rückstelleinrichtung 115 vorgesehen, die eine elektrische Antriebseinrichtung 120 und ein Eingriffselement 125 umfasst, wobei die Antriebseinrichtung 120 dazu eingerichtet ist, das Eingriffselement 125 zu verfahren, um den Wählhebel 105 in die vorbestimmte Position 110 zu bewegen. Ferner umfasst die Rückstelleinrichtung 115 einen Positionssensor 130, der nach dem induktiven Messprinzip arbeitet.

Der Positionssensor 130 umfasst eine Spule 135, die fest gegenüber der Antriebseinrichtung 120 angeordnet ist, und ein magnetisches Flusselement 140, das fest gegenüber dem Eingriffselement 125 angebracht ist. Eine Ansteuereinrichtung 145 ist zur Ansteuerung der Antriebseinrichtung 120 in Abhängigkeit eines Signals des Positionssensors 130 eingerichtet. Die Ansteuerung kann insbesondere bezüglich eines Signals erfolgen, das an einer Schnittstelle 150 abgetastet werden kann. Dabei ist bevorzugt, dass die Spule 135 unmittelbar an der Ansteuereinrichtung 145 angebracht ist. Insbesondere ist bevorzugt, dass die Ansteuereinrichtung 145 eine Leiterbahnplatte 155 umfasst, an der die Spule 135 angebracht ist. Die Spule 135 kann insbesondere in Form einer gedruckten Schaltung ausgeführt sein, wobei in einer Ebene in konzentrischen Windungen eine Leiterbahn aus einem leitfähigen Material ausgebildet ist. Es können auch mehrere Spulen, die elektrisch miteinander verbunden sind, in unterschiedlichen Ebenen übereinander vorgesehen und elektrisch miteinander verbunden sein.

Der Positionssensor 130 hat bevorzugterweise die Funktion eines Endlagenschalters, der auf binäre Weise abtastet, ob das Eingriffselement 125 eine vorbestimmte Position erreicht hat oder nicht. Dazu kann ein Abtastwert mit einem Schwellenwert verglichen werden. In anderen Ausführungsformen kann auch eine mehr als zweiwertige digitale Positionsbestimmung des Eingriffselements 125 durchgeführt werden. Es kann auch eine analoge, also stufenlose Positionsbestimmung durchgeführt werden.

Es kann ein differentielles Messverfahren verwendet werden, bei dem eine weitere Spule 160 vorgesehen ist, deren Induktivität bzw. Magnetfeld von einer Position des Flusselements 140 unbeeinflusst ist. Die Induktivitäten der Spulen 135 und 160 können dann miteinander verglichen werden, um die Position des Fluss-elements 140, und damit des Eingriffselements 125, analog oder digital zu bestimmen. Beispielsweise können zwei Schwingkreise mit den Spulen 135 und 160 aufgebaut sein, deren Frequenzen bestimmt und miteinander verglichen werden.

In einer besonders bevorzugten Ausführungsform können noch eine oder mehrere weitere Spulen 165 von der Rückstelleinrichtung 115 umfasst sein, wobei die weitere Spule 165 beispielsweise zur Abtastung der Position 110 des Wählhebels 105 eingerichtet sein kann. Dazu kann der Wählhebel ein Flusselement umfassen oder mit einem Flusselement mechanisch gekoppelt sein. Besonders bevorzugt ist, dass auch die dritte Spule 165 unmittelbar an der Ansteuereinrichtung 145 angebracht ist, insbesondere als gedruckte Spule auf der Leiterplatte 155.

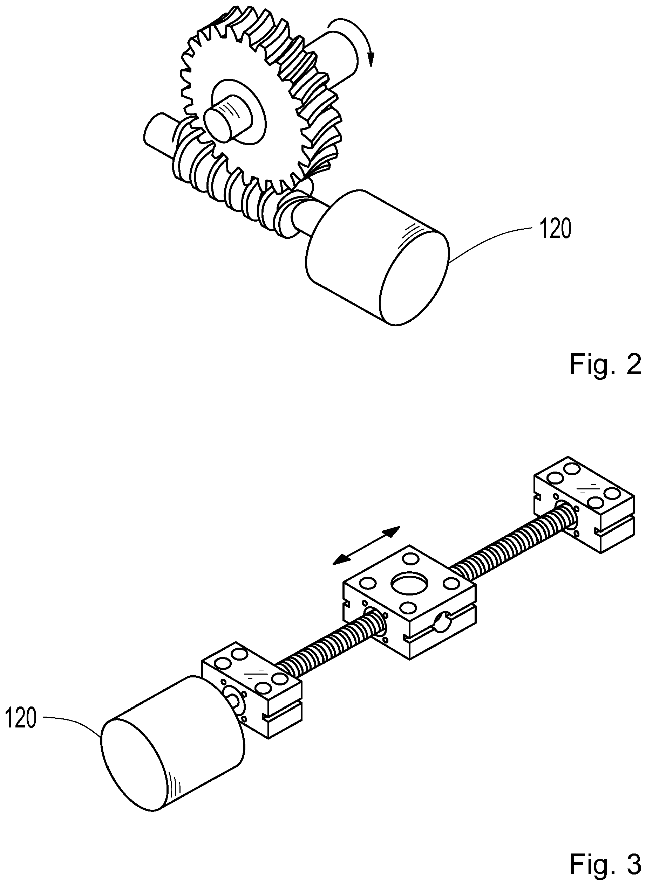

Figuren 2 und 3 zeigen zwei unterschiedliche mechanische Antriebe, die zur Umsetzung einer Bewegung der Antriebseinrichtung 120 auf das Eingriffselement 125 verwendet werden können. Dabei zeigt Figur 2 ein beispielhaftes Schneckengetriebe und Figur 3 einen beispielhaften Linearantrieb. In beiden Fällen umfasst die Antriebseinrichtung 120 einen Elektromotor, der eine Drehbewegung bereitstellt. Das Schneckengetriebe von Figur 2 untersetzt diese Bewegung und stellt ebenfalls eine Drehbewegung bereit, die zum Rückstellen des Wählhebels 105 verwendet werden kann. Der Linearantrieb von Figur 3 untersetzt ebenfalls die Drehbewegung der Antriebseinrichtung 120, stellt jedoch eine lineare Bewegung bereit, die zum Rückstellen des Wählhebels 105 verwendet werden kann. In beiden Fällen kann auch eine zusätzliche Getriebestufe verwendet werden, beispielsweise jeweils zwischen der Antriebseinrichtung 120 und der Schnecke. Beide gezeigten Antriebe bzw. Antriebsarten sind mit der vorliegenden Erfindung verwendbar.

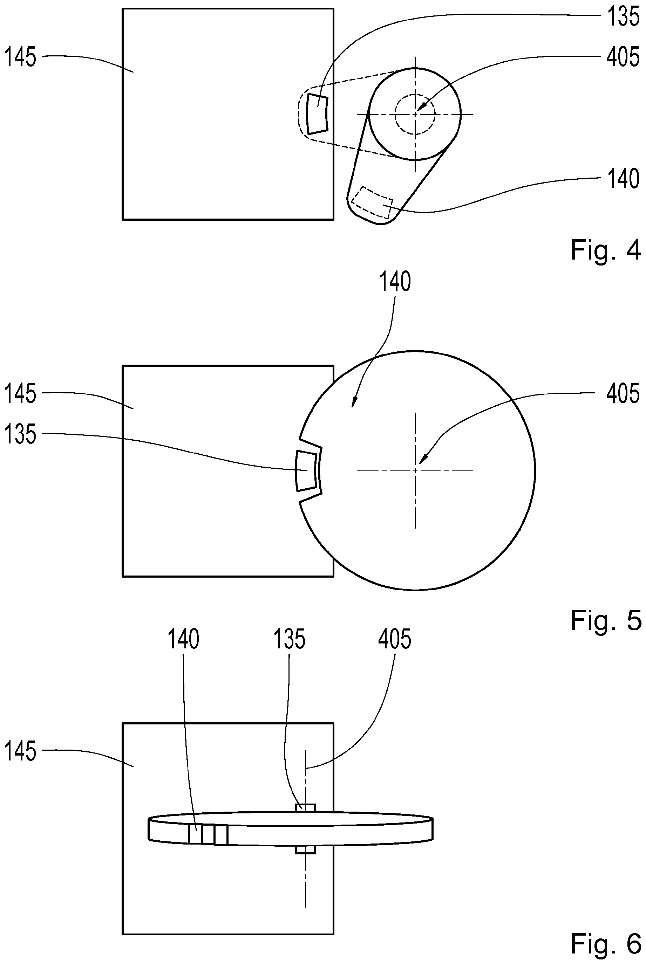

Figuren 4 und 5 zeigen Varianten einer Anordnung eines mechanischen Antriebs, der eine Drehbewegung bereitstellt, an der Ansteuereinrichtung 145 der Rückstelleinrichtung 115 von Figur 1. Nach der Ausführungsform von Figur 4 kann bestimmt werden, dass das Eingriffselement 125 eine vorbestimmte Position erreicht hat, wenn sich das Flusselement 140 in geringem Abstand zur Spule 135 befindet. Dazu ist das Flusselement 140 auf einem Radius um eine Drehachse 405 angebracht, um die der mechanische Antrieb die Drehbewegung zum Rückstellen des Wählhebels 105 bereitstellt. In der vorliegenden Darstellung ist der Hebel beispielhaft als Nocke oder Exzenter ausgeführt, der unmittelbar das Eingriffselement 125 tragen kann. In einer anderen Ausführungsform ist ein separates Element vorgesehen, um das Eingriffselement 125 zu tragen.

Eine zur Ausführungsform von Figur 4 komplementäre Ausführungsform ist in Figur 5 dargestellt. Hier kann bestimmt werden, dass das Eingriffselement 125 eine vorbestimmte Position erreicht hat, wenn das magnetische Flusselement 140 von der Spule 135 entfernt ist, was einer vorbestimmten Drehstellung um die Drehachse 405 entspricht.

In den Ausführungsformen der Figuren 4 und 5 können auch zwei Flusselemente 140 auf unterschiedlichen Seiten der Leiterplatte 155 vorgesehen sein. Dazu kann der Hebel, die Nocke, die Scheibe oder der Exzenter, der die Flusselemente 140 gegenüber der Drehbewegung um die Drehachse 405 hält, in der Drehebene geschlitzt sein, um im Bereich des Schlitzes die Leiterplatte 155 aufzunehmen.

Es ist allgemein möglich, das magnetische Flusselement 140 entweder zum Verstärken oder zum Dämpfen eines Magnetfelds der ersten Spule 135 auszubilden. Eine Verstärkung kann beispielsweise mittels eines weichmagnetischen Metalls erzielt werden, während eine Abschwächung mittels eines leitfähigen, vorzugsweise nicht ferromagnetischen Materials wie Kupfer oder Aluminium bewirkt werden kann. Dabei können durch das Magnetfeld in dem Material Wirbelströme gebildet werden, die das Magnetfeld bzw. den magnetischen Fluss verringern. In einer Ausführungsform ist ein mechanisches Element der Rückstelleinrichtung 115 bereits aus einem passenden Material gefertigt, sodass das Element nur noch entsprechend einer der Optionen der Figuren 4 oder 5 geformt sein muss, um eine Positionsbestimmung mittels der Spule 135 durchführen zu können. Das Material kann beispielsweise Aluminium- oder Zinkdruckguss umfassen. In einer anderen Ausführungsform kann ein magnetisches Flusselement 140 an einer geeigneten Stelle eines beweglichen Elements der Rückstelleinrichtung 115 angebracht werden.

Figur 6 zeigt eine Alternative der Anbringung des magnetischen Flusselements 140 an einem drehbaren Bauelement der Rückstelleinrichtung 115, bei der die Drehachse 405 parallel zu einer Ebene liegt, in der sich die Ansteuereinrichtung 145 erstreckt. Das magnetische Flusselement 140 ist anders als in den in den Figuren 4 und 5 gezeigten Ausführungsformen bezüglich der Drehachse 405 nicht axial sondern radial orientiert. Dazu können beispielsweise eines oder mehrere Flusselemente 140 auf der Mantelfläche eines zylindrischen Bauteils angeordnet sein. In einer weiteren Ausführungsform kann ein zylinderförmiges Bauelement auf einem vorbestimmten Umfang um die Drehachse 405 über einen oder mehrere axiale Fortsätze verfügen, an dem das magnetische Flusselement 140 angebracht ist. Das zylinderförmige Bauteil kann dann einer Krone ähneln, wobei die Spule 135 in axialer Richtung so angeordnet ist, dass es in der Drehebene liegt, in der einer oder mehrere Fortsätze liegen.

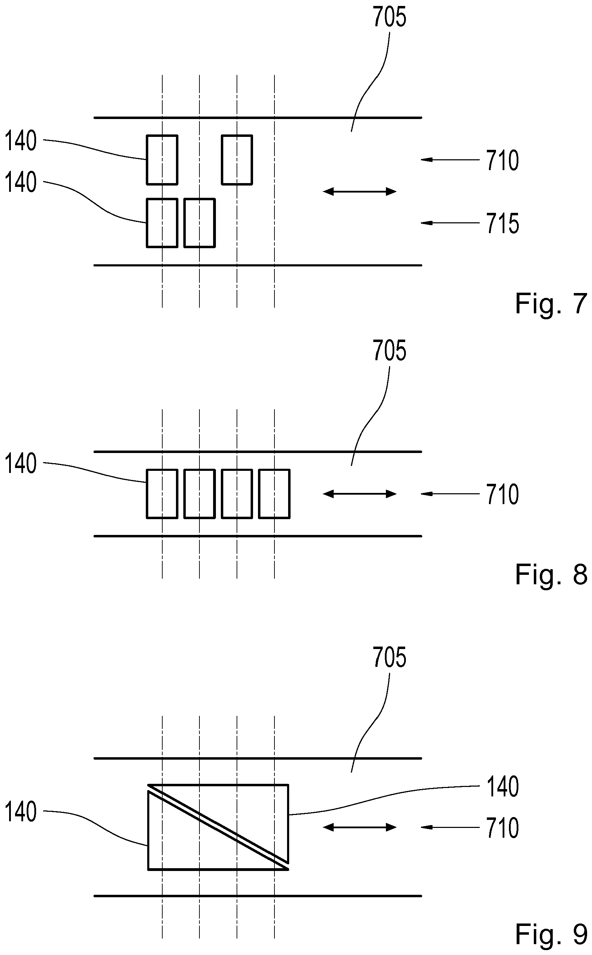

Figur 7 zeigt eine Anordnung von Flusselementen 140 an einem beweglichen Element 705, das mit dem Eingriffselement 125 mechanisch gekoppelt ist. Die gezeigte Anordnung kann alternativ bei einem um die Drehachse 405 gedrehten oder bei einem linear verschobenen beweglichen Element 705 angewandt werden. An dem Element 705 sind mehrere Flusselemente 140 angebracht, die mit mehreren Spulen 135 des Positionssensors 130 abgetastet werden können. Dabei ist bevorzugt, dass die Spulen 135 die Präsenz bzw. Absenz unterschiedlich magnetischer Flusselemente 140 abtasten. In der Darstellung von Figur 7 sind die Flusselemente 140 beispielsweise in eine erste Spur 710 und eine zweite Spur 715 aufgeteilt. Jeder Spur 710, 715 ist eine Spule 135 zugeordnet. Die Spulen 135 können sich in einer Richtung senkrecht zur Bewegungsrichtung des beweglichen Elements 705 nebeneinander befinden. Es kann eine binäre Codierung der Position des Elements 705 erfolgen. Die Codierung kann so viele Bits wie Spuren 710, 715 unterstützen, was einer maximalen Auflösung von 2ⁿ Positionen bei n Spuren entspricht. Mit der gezeigten Anordnung von zwei Spuren können vier unterschiedliche Positionen des Elements 705 abgetastet werden. In weiteren Ausführungsformen können auch mehr Spuren 710, 715 verwendet werden, um die Auflösung zu erhöhen.

Figur 8 zeigt eine andere Variante am beweglichen Element 705 von Figur 7, bei der nur eine Spur 710 verwendet wird. Hier sind die Flusselemente 140 vorzugsweise äquidistant in der Bewegungsrichtung angebracht. Dadurch kann eine inkrementelle Abtastung der Flusselemente 140 mittels der Spule 135 erfolgen. Die Flusselemente 140 können bezüglich der Bewegungsrichtung des Elements 705 so breit wie die Lücken zwischen ihnen sein. Um die Auflösung zu erhöhen, können dabei zwei Spulen 135 eingesetzt werden, die in Bewegungsrichtung um die halbe Breite der Flusselemente 140 versetzt sind.

Figur 9 zeigt noch eine alternative Anordnung von Flusselementen 140 am beweglichen Element 705 analog zu den Ausführungsformen der Figuren 7 und 8. Hier sind zwei Flusselemente 140 unterschiedlichen Typs in der gleichen Spur 710 angeordnet. Während das eine Flusselement 140 eine Verstärkung des Magnetfelds bewirkt, ist das andere zur Dämpfung des Magnetfelds der Spule 135 eingerichtet. Die beiden Flusselemente 140 verjüngen sich antiparallel entlang der Bewegungsrichtung des Elements 705. Je nach Position der Spule 135 bezüglich des Elements 705 kann das Magnetfeld der Spule 135 negativ, gar nicht oder positiv beeinflusst sein. Dadurch kann insbesondere eine analoge Abtastung der Position des beweglichen Elements 705 durchgeführt werden. Die analog abgetastete Position kann auch diskretisiert werden, um eine digitale Position bereitzustellen.

### Bezugszeichen

- 100: Steuersystem
- 105: Wählhebel
- 110: Position des Wählhebels
- 115: Rückstelleinrichtung
- 120: elektrische Antriebseinrichtung
- 125: Eingriffselement
- 130: Positionssensor
- 135: (erste) Spule
- 140: magnetisches Flusselement
- 145: Ansteuereinrichtung
- 150: Schnittstelle
- 155: Leiterplatte
- 160: (zweite) Spule
- 165: (dritte) Spule

- 405: Drehachse

- 705: bewegliches Element
- 710: erste Spur
- 715: zweite Spur

## Patentansprüche

1. Rückstelleinrichtung (115) für einen Wählhebel (105) für eine Gangstufe eines Getriebes in einem Kraftfahrzeug, wobei die Rückstelleinrichtung (115) folgendes umfasst:
- eine elektrische Antriebseinrichtung (120) zum Verfahren eines Eingriffselements (125), um den Wählhebel (105) in eine vorbestimmte Position zu bewegen;
- einen Positionssensor (130) zur Bestimmung einer Position des Eingriffselements (125) und
- eine elektrische Ansteuereinrichtung (145) zur Ansteuerung der Antriebseinrichtung (120) in Abhängigkeit der Position des Eingriffselements (125);
**dadurch gekennzeichnet, dass**
- der Positionssensor (130) eine erste Spule (135) umfasst, die an der Ansteuereinrichtung (145) angebracht ist,
- wobei ein magnetisches Flusselement (140) mechanisch mit dem Eingriffselement (125) gekoppelt ist,
- wobei die Antriebseinrichtung (120) derart bezüglich der Ansteuereinrichtung (145) angeordnet ist, dass das Flusselement (140) in Abhängigkeit einer Position des Eingriffselements (125) die Induktivität der ersten Spule (135) beeinflusst.

2. Rückstelleinrichtung (115) nach Anspruch 1, wobei die Ansteuereinrichtung (145) eine Leiterplatte (155) umfasst und die erste Spule (135) als Leiterbahn auf der Leiterplatte (155) ausgebildet ist.

3. Rückstelleinrichtung (115) nach Anspruch 1 oder 2, wobei der Positionssensor (130) eine zweite Spule (160) umfasst, die derart an der Ansteuereinrichtung (145) angebracht ist, dass ihre Induktivität von einer Position des Eingriffselements (125) unbeeinflusst ist, wobei der Positionssensor (130) dazu eingerichtet ist, die Position des Eingriffselements (125) auf der Basis eines Unterschieds der Induktivitäten der Spulen (135) zu bestimmen.

4. Rückstelleinrichtung (115) nach Anspruch 2, wobei ein weiterer Positionssensor (130) zur Bestimmung einer Position des Wählhebels (105) vorgesehen ist, wobei der weitere Positionssensor (130) eine dritte Spule (165) umfasst, deren Induktivität von der Position des Wählhebels (105) abhängig ist, die zweite Spule (160) von einer Position des Wählhebels (105) unbeeinflusst ist, und die Position des Wählhebels (105) auf der Basis eines Unterschieds der Induktivitäten der zweiten und der dritten Spule (165) bestimmt wird.

5. Rückstelleinrichtung (115) nach einem der vorangehenden Ansprüche, wobei das Flusselement (140) einen Abschnitt mit einem weichmagnetischen Werkstoff umfasst, um einen magnetischen Fluss des durch die erste Spule (135) bereitgestellten Magnetfelds zu verstärken, wenn der Abschnitt der ersten Spule (135) angenähert wird.

6. Rückstelleinrichtung (115) nach einem der vorangehenden Ansprüche, wobei das Flusselement (140) einen Abschnitt mit einem elektrisch leitfähigen Material umfasst, um einen magnetischen Fluss des durch die erste Spule (135) bereitgestellten Magnetfelds zu verringern, wenn der Abschnitt der ersten Spule (135) angenähert wird.

7. Rückstelleinrichtung (115) nach einem der Ansprüche 5 oder 6, wobei eine Anordnung von mehreren Abschnitten mit Flusselementen (140) vorgesehen ist, wobei die Abschnitte nacheinander an der ersten Spule (135) vorbei bewegt werden, wenn das Eingriffselement (125) verfahren wird, wobei die Position des Eingriffselements (125) auf der Basis eines zeitlichen Verlaufs von Induktionen an der ersten Spule (135) inkrementell bestimmt wird.

8. Rückstelleinrichtung (115) nach einem der Ansprüche 5 oder 6, wobei mehrere erste Spulen (135) vorgesehen sind, wobei eine Anordnung von mehreren Abschnitten mit Flusselementen (140) vorgesehen ist, wobei die Anordnung an den ersten Spulen (135) vorbei bewegt wird, wenn das Eingriffselement (125) verfahren wird, wobei die Position des Eingriffselements (125) auf der Basis einer Kombination von Induktionen der ersten Spulen (135) absolut bestimmt wird.

9. Rückstelleinrichtung (115) nach einem der Ansprüche 2 bis 8, wobei zwei Flusselemente (140) vorgesehen sind, die einander bezüglich der Leiterplatte (155) gegenüber liegen.

10. Rückstelleinrichtung (115) nach einem der Ansprüche 2 bis 9, wobei zwei erste Spulen (135) vorgesehen sind, die auf unterschiedlichen Ebenen der Leiterplatte (155) liegen.

## Claims

1. Reset device (115) for a selector lever (105) for a gear of a transmission in a motor vehicle, wherein the reset device (115) comprises the following:
- an electric drive device (120) for moving an engagement element (125) in order to move the selector lever (105) into a predetermined position;
- a position sensor (130) for determining a position of the engagement element (125) and
- an electric actuation device (145) for actuating the drive device (120) as a function of the position of the engagement element (125);
**characterized in that**
- the position sensor (130) comprises a first coil (135) which is mounted on the actuation device (145),
- wherein a magnetic flux element (140) is mechanically coupled to the engagement element (125),
- wherein the drive device (120) is arranged with respect to the actuation device (145) in such a way that the flux element (140) influences the inductance of the first coil (135) as a function of a position of the engagement element (125).

2. Reset device (115) according to Claim 1, wherein the actuation device (145) comprises a circuit board (155), and the first coil (135) is embodied as a conductor track on the circuit board (155).

3. Reset device (115) according to Claim 1 or 2, wherein the position sensor (130) comprises a second coil (160) which is mounted on the actuation device (145) in such a way that its inductance is not influenced by a position of the engagement element (125), wherein the position sensor (130) is configured to determine the position of the engagement element (125) on the basis of a difference between the inductances of the coils (135).

4. Reset device (115) according to Claim 2, wherein a further position sensor (130) is provided for determining a position of the selector lever (105), wherein the further position sensor (130) comprises a third coil (165) whose inductance is dependent on the position of the selector lever (105), the second coil (160) is not influenced by a position of the selector lever (105), and the position of the selector lever (105) is determined on the basis of a difference between the inductances of the second and third coils (165).

5. Reset device (115) according to one of the preceding claims, wherein the flux element (140) comprises a section with a soft-magnetic material, in order to amplify a magnetic flux of the magnetic field which is made available by the first coil (135) when the section of the first coil (135) is approached.

6. Reset device (115) according to one of the preceding claims, wherein the flux element (140) comprises a section with an electrically conductive material, in order to reduce a magnetic flux of the magnetic field made available by the first coil (135) when the section of the first coil (135) is approached.

7. Reset device (115) according to one of Claims 5 or 6, wherein an arrangement of a plurality of sections with flux elements (140) is provided, wherein the sections are moved successively passed the first coil (135) when the engagement element (125) is moved, wherein the position of the engagement element (125) is determined incrementally on the basis of a time profile of inductions at the first coil (135).

8. Reset device (115) according to one of Claims 5 or 6, wherein a plurality of first coils (135) are provided, wherein an arrangement of the plurality of sections with flux elements (140) is provided, wherein the arrangement is moved passed the first coils (135) when the engagement element (125) is moved, wherein the position of the engagement element (125) is determined in absolute terms on the basis of a combination of inductions of the first coils (135).

9. Reset device (115) according to one of Claims 2 to 8, wherein two flux elements (140) are provided which lie opposite one another with respect to the circuit board (155).

10. Reset device (115) according to one of Claims 2 to 9, wherein two first coils (135) are provided which lie in different planes of the circuit board (155) .

## Revendications

1. Dispositif de rappel (115) pour un levier de sélection (105) pour un rapport de transmission d'une boîte de vitesses dans un véhicule automobile, le dispositif de rappel (115) comprenant les éléments suivants :
- un dispositif d'entraînement électrique (120) destiné à mouvoir un élément d'engrènement (125) afin de déplacer le levier de sélection (105) dans une position prédéfinie ;
- un capteur de position (130) destiné à déterminer une position de l'élément d'engrènement (125) et
- un dispositif de commande électrique (145) destiné à commander le dispositif d'entraînement (120) en fonction de la position de l'élément d'engrènement (125) ;
**caractérisé en ce que**
- le capteur de position (130) comporte une première bobine (135) qui est montée sur le dispositif de commande (145),
- un élément à flux magnétique (140) étant accouplé mécaniquement avec l'élément d'engrènement (125),
- le dispositif d'entraînement (120) étant disposé par rapport au dispositif de commande (145) de telle sorte que l'élément à flux (140) influence l'inductance de la première bobine (135) en fonction d'une position de l'élément d'engrènement (125).

2. Dispositif de rappel (115) selon la revendication 1, le dispositif de commande (145) comportant un circuit imprimé (155) et la première bobine (135) étant réalisée sous la forme d'une piste conductrice sur le circuit imprimé (155).

3. Dispositif de rappel (115) selon la revendication 1 ou 2, le capteur de position (130) comportant une deuxième bobine (160) qui est montée sur le dispositif de commande (145) de telle sorte que son inductance n'est pas influencée par une position de l'élément d'engrènement (125), le capteur de position (130) étant conçu pour déterminer la position de l'élément d'engrènement (125) en fonction d'une différence entre les inductances des bobines (135).

4. Dispositif de rappel (115) selon la revendication 2, un capteur de position (130) supplémentaire destiné à déterminer une position du levier de sélection (105) étant présent, le capteur de position (130) supplémentaire comportant une troisième bobine (165) dont l'inductance est dépendante de la position du levier de sélection (105), la deuxième bobine (160) n'étant pas influencée par la position du levier de sélection (105), et la position du levier de sélection (105) étant déterminée en fonction d'une différence entre les inductances des deuxième et troisième bobines (165).

5. Dispositif de rappel (115) selon l'une des revendications précédentes, l'élément à flux (140) comportant une portion ayant un matériau magnétique doux afin d'amplifier un flux magnétique du champ magnétique délivré par la première bobine (135) lorsque la portion est approchée de la première bobine (135).

6. Dispositif de rappel (115) selon l'une des revendications précédentes, l'élément à flux (140) comportant une portion ayant un matériau électriquement conducteur afin de réduire un flux magnétique du champ magnétique délivré par la première bobine (135) lorsque la portion est approchée de la première bobine (135).

7. Dispositif de rappel (115) selon l'une des revendications 5 ou 6, un arrangement de plusieurs portions comprenant des éléments à flux (140) étant présent, les portions étant déplacées l'une après l'autre à proximité de la première bobine (135) lorsque l'élément d'engrènement (125) est mu, la position de l'élément d'engrènement (125) étant déterminée de manière incrémentale en fonction d'une courbe dans le temps des inductions au niveau de la première bobine (135) .

8. Dispositif de rappel (115) selon l'une des revendications 5 ou 6, plusieurs premières bobines (135) étant présentes, un arrangement de plusieurs portions comprenant des éléments à flux (140) étant présent, l'arrangement étant déplacé à proximité des premières bobines (135) lorsque l'élément d'engrènement (125) est mu, la position de l'élément d'engrènement (125) étant déterminée de manière absolue en fonction d'une combinaison des inductions des premières bobines (135) .

9. Dispositif de rappel (115) selon l'une des revendications 2 à 8, deux éléments à flux (140) étant présents, lesquels se trouvent opposés l'un à l'autre en référence au circuit imprimé (155)

10. Dispositif de rappel (115) selon l'une des revendications 2 à 9, deux premières bobines (135) étant présentes, lesquelles se trouvent sur des plans différents du circuit imprimé (155).
